# EUROPEAN PATENT SPECIFICATION

(11) **EP 2 228 521 B1**
(45) Date of publication and mention of the grant of the patent: **15.08.2018**
(21) Application number: 10155872.4
(22) Date of filing: 09.03.2010
(51) Int. Cl.: F01N 3/035, F01N 3/08, F01N 3/20, F01N 13/00

(54) **IC motor exhaust gas treatment unit**
Abgasnachbehandlungseinheit einer Brennkraftmaschine
Unité de traitement de gaz d'échappement d'un moteur à combustion interne

(30) Priority: 09.03.2009 IT TO20090170
(43) Date of publication of application: 15.09.2010
(73) Proprietor: OFFICINE METALLURGICHE G. CORNAGLIA S.p.A., 10092 Beinasco (IT)
(72) Inventor: Cornaglia, Piermario, 10024 Moncalieri (TO) (IT); Micheletti, Marco, 10143 Torino (IT)
(74) Representative: Robba, Pierpaolo

(56) References cited:
- WO-A-2009/024815
- US-A1- 2009 019 842

## Description

### Technical field

The present invention relates to an internal combustion (IC) engine exhaust gas treatment unit.

More precisely, the invention relates to an IC engine exhaust gas treatment unit exploiting the Selective Catalytic Reduction (SCR) technology.

### Prior art

At present, in the field of IC engines, especially diesel engines, systems for reducing pollutants in exhaust gases are widely used.

As known, a first polluting factor in exhaust gases is the presence of fine powders or particulate. In order to reduce particulate, systems for particle aggregation, with or without use of additives such as cerium oxide, are presently used. Such agglomerates, having greater size than the original particulate, are trapped by the filter and do not disperse into the atmosphere. A known device used for abating fine powder polluting emissions of diesel engines is the so-called Diesel Particulate Filter (DPF).

It is known as well that another important pollutant in exhaust gases of diesel engines is nitrogen oxide.

A solution for abating nitrogen oxides in exhaust gases is provided by the Selective Catalytic Reduction (SCR) systems, which are based on the reaction, promoted by a suitable catalytic system, between nitrogen oxides contained in exhaust gases and ammonia introduced for acting as a reducing agent.

According to the presently used techniques, ammonia is introduced in the form of a reactant, preferably a liquid reactant, capable of releasing ammonia if exposed to suitable temperature conditions or if subjected to the action of suitable catalysts. The preferred source is generally urea in aqueous solution, from which ammonia is obtained by hydrolysis. Urea can be introduced into the exhaust systems in various manners: for instance it can be sprayed into the exhaust gas stream upstream a converter containing the SCR catalyst.

Recently, spraying systems have become widespread in which the liquid, typically a 32,5% urea solution contained in a tank mounted on board the vehicle, is made to pass at a given pressure through a nozzle or a valve and is directed into the exhaust gas stream in order to transform the polluting nitrogen oxide into an environment-safe water - nitrogen compound.

A system of the above kind for reducing nitrogen oxides in exhaust gases is disclosed for instance in EP 1 054 722.

WO 2009/24815 discloses another system of the above kind, comprising an injection and mixing zone divided into two parts, into which corresponding exhaust gas streams arrive.

As known, injection of the urea solution must take place so that a uniform urea concentration in the gas stream is obtained, so as to optimise the conversion reaction of the nitrogen oxide.

Therefore, two sometimes contrasting requirements are to be taken into account in designing the exhaust systems exploiting the above technology. On the one hand, for obvious reasons of size in vehicle design and of cost, it is in fact necessary to keep the mass and the volume of the exhaust system limited, whereas on the other hand it is necessary to promote a uniform dispersion of the urea solution so as to optimise the conversion of the nitrogen oxide.

The known systems generally have the drawback of being bulky, so that they are not suitable for being mounted on small-size vehicles or on vehicles in which the available space is reduced.

The known systems are moreover complex and expensive to be made, and therefore they are not suitable for being made on a reduced scale, for instance in order to meet the requirement of availability of small-size systems. In such case indeed the components of such systems would be difficult to be manufactured and would entail a considerable increase in the production costs.

Thus, it is a first object of the present invention to provide an IC engine exhaust gas treatment unit exploiting the SCR technology, which has improved performance and a reduced size with respect to the prior art.

It is a further, but not the last object of the invention to provide a compact exhaust gas treatment unit of the above kind, which is simple to be constructed so that it can be industrially produced with limited costs.

### Description of the Invention

The above and other objects are achieved by the internal combustion engine exhaust gas treatment unit as defined in the appended claims.

Advantageously, thanks to the fact that the transfer duct arranged between the fine powder abatement unit and the catalyser unit comprises two mutually perpendicular consecutive sections, of which a first section extends over substantially the whole length of the housing and a second section extends over substantially the whole width of said housing, there is obtained an optimum dispersion of the reducing mixture conveyed by the water/urea flow into the exhaust gas stream flowing within said duct and the size of the whole treatment unit is kept compact.

### Brief Description of the Figures

A preferred embodiment of the invention will be described hereinafter by way of non limiting example, with reference to the accompanying drawings, in which:

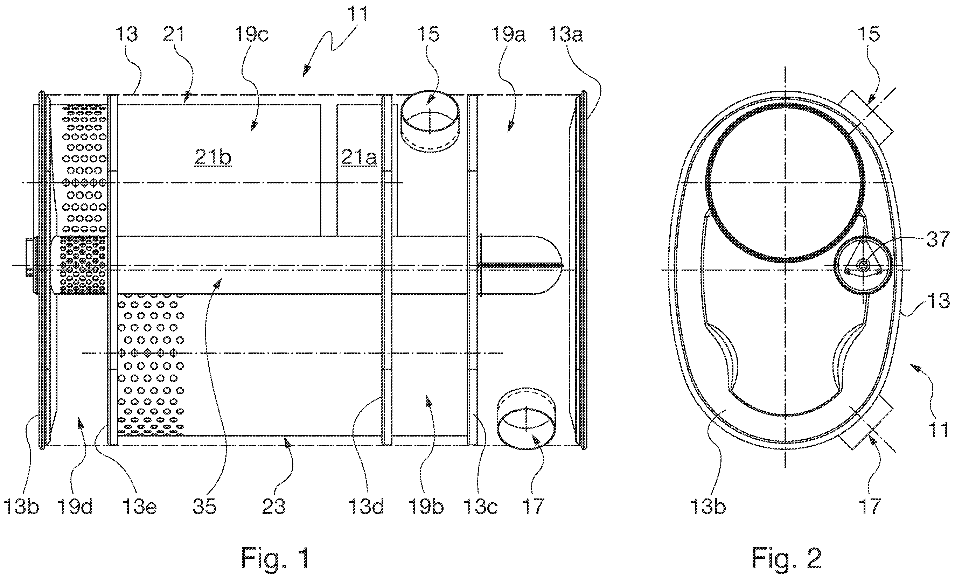

- Fig. 1 is a side view of the unit according to the invention;
- Fig. 2 is a view of one base of the unit shown in Fig. 1;

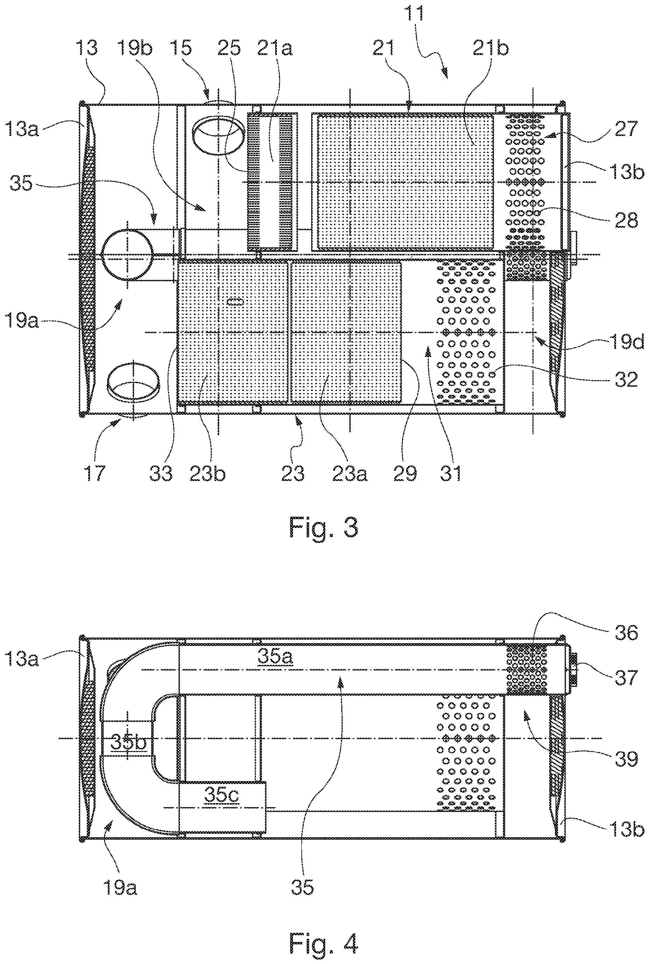

- Fig. 3 is a cross-sectional view along line A-A of Fig. 2;
- Fig. 4 is a cross-sectional view along line B-B of Fig. 3;

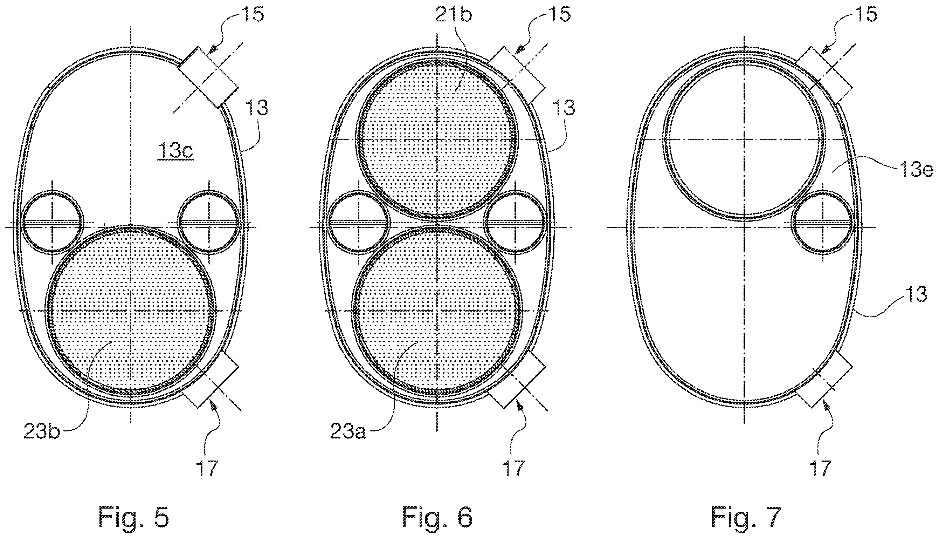

- Fig. 5 is a cross-sectional view along line C-C of Fig. 3;
- Fig. 6 is a cross-sectional view along line D-D of Fig. 3;
- Fig. 7is a cross-sectional view along line E-E of Fig. 3;

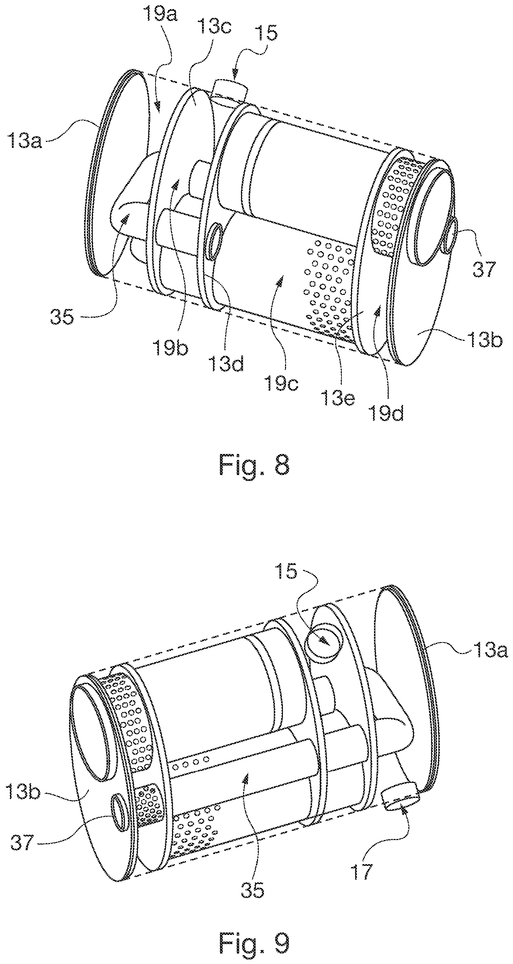

- Figs. 8 and 9 are perspective views of the inside of the unit shown in Fig. 1.

### Description of a Preferred Embodiment

Referring to the accompanying drawings, the treatment unit according to the invention, generally denoted by reference numeral 11, comprises a substantially sealed housing 13 equipped with an inlet opening 15 and an outlet opening 17, for the entrance and the evacuation of the exhaust gas into and from unit 11, respectively.

According to a preferred embodiment of the invention, housing 13 has a substantially cylindrical shape and an oval cross section. Moreover said inlet and outlet openings 15, 17 are radially oriented relative to the longitudinal axis of said housing 13, and said housing has a longitudinal extension greater than the transversal extension.

Housing 13 is closed at its opposite ends by respective end plates 13a, 13b and is internally partitioned into four separate compartments 19a, 19b, 19c, 19d by means of three transversal parallel cross walls 13c, 13d, 13e. Compartment 19a is thus defined between end plate 13a and cross wall 13c, the adjacent compartment 19b is defined between cross wall 13c and cross wall 13d, the adjacent compartment 19c is defined between cross wall 13d and cross wall 13e and the adjacent compartment 19d is defined between cross wall 13e and end plate 13b. Moreover, said compartments are substantially sealed and are in communication with each other or with the environment outside housing 13, as it will become apparent from the following description.

Inlet opening 15 for the entrance of the exhaust gases opens into the second compartment 19b, whereas opening 17 for the evacuation of the exhaust gases communicates with the first compartment 19a. Said first and second compartments 19a, 19b further define respective expansion chambers for the exhaust gases, at the beginning and at the end, respectively, of the path followed by the exhaust gas within unit 11.

A filter unit 21 for fine powder abatement and a catalyser unit 23, both having a cylindrical shape, are hosted side by side within housing 13, with the longitudinal axes parallel and longitudinally arranged with respect to the axis of housing 13.

Filter unit 21 comprises two elements 21a, 21b arranged in series and has an axial opening 25 for the entrance of the exhaust gases communicating with the second compartment 19b, and an opening for the evacuation of the exhaust gases defined by radial holes 28 communicating with the expansion chamber defined in the fourth compartment 19d. According to a preferred embodiment of the invention, said filter unit 21 is intended for reducing the particulate and is of the DPF (Diesel Particulate Filter) type.

Catalyser unit 23 comprises two catalyser elements 23a, 23b arranged in series and has an axial opening 29 for the entrance of the exhaust gases communicating with an expansion chamber 31 radially opening into the third compartment 19c through a plurality of holes 32, and an axial opening 33 for the evacuation of the exhaust gases communicating with the first compartment 19a. According to a preferred embodiment of the invention, said catalyser unit 23 is intended for reducing the nitrogen oxides in the exhaust gas stream according to the SCR technique.

According to the invention, a transfer duct 35 for transferring the exhaust gas from said filter unit to said catalyser unit is provided between the expansion chamber defined downstream filter unit 21, in correspondence of compartment 19d, and the expansion chamber defined upstream catalyser unit 23, in correspondence of the third compartment 19c. The urea-based reducing mixture is introduced into said duct, preferably by injection, through introduction means 37, preferably consisting of a nozzle or a suitable valve and axially arranged at the beginning of duct 35 in the direction of flow of the exhaust gases, in correspondence of end plate 13b of housing 13.

Always according to the invention, said transfer duct 35 is substantially "U" shaped, the "U" shape being defined by three mutually perpendicular consecutive sections.

More precisely: said first section 35a is a rectilinear section, longitudinally extending within housing 13 between the fourth compartment 19d, where said duct 35 begins, and the first compartment 19a; the second section 35b is a rectilinear connection section, transversally extending within housing 13, and it is housed within the first compartment 19a; and said third rectilinear section 35c is parallel to the first section 35a. it is housed between the first and second compartments and it axially opens into the third compartment 19c, where said duct 35 ends.

Said first rectilinear section 35a further comprises a radially directed gas inlet 39 defined by a corresponding portion of duct 35 provided with holes 36 opening into the fourth compartment 19d, said introducing means 37 being provided in proximity of that portion.

Said holes 36 extend over a limited initial portion of duct 35, substantially corresponding to the width of the fourth compartment 19d.

Moreover, said duct 35 is preferably laterally closed between said holes 36 and the axial opening of duct 35 provided in compartment 19c, i.e., it does not have radial openings and therefore extends without interruptions between radial holes 36 provided on the side surface of duct 35, through which the exhaust gas enters, and the axial outlet provided in the third compartment 19c, where a corresponding expansion chamber is defined and where the gas leaving duct 35 expands. Moreover, the exhaust gas flows along said duct 35 substantially in only one direction.

Advantageously, according to the invention, the first rectilinear section 35a of said transfer duct 35, where dispersion of the urea-based mixture takes place through introduction means 37, extends over substantially the whole length of housing 13. Similarly, the transversal connection section, perpendicular to rectilinear section 35a, extends over substantially the whole width of the first compartment 19a, substantially corresponding to the width of housing 13. By this arrangement, there is obtained an optimum dispersion of the urea-based mixture into the exhaust gas stream flowing between inlet 39 and the axial outlet of duct 35 the expansion chamber of compartment 19c, thereby keeping the size of the whole treatment unit extremely compact.

Unit 11 according to the invention can advantageously be made of steel and assembled according to the techniques conventionally used in the field.

## Claims

1. IC motor exhaust gas treatment unit, comprising a housing (13) equipped with an inlet opening (15) and an outlet opening (17), for the entrance and the evacuation of the exhaust gases, respectively, a filter unit and a catalyser unit being hosted within said housing, a transfer duct (35) for transferring the exhaust gas from said filter unit to said catalyser unit being provided between said units, said transfer duct (35) being "U" shaped and having defined therein a first rectilinear longitudinal section (35a) equipped, at its beginning, with means (37) for introducing a mixture of reducing substance, a second transversal connection section (35b) and a third rectilinear section (35c) parallel to the first section (35a), **characterised in that** said housing (13) is closed at its opposite ends by respective end plates (13a, 13b) and is internally partitioned into four compartments (19a, 19b, 19c, 19d) by means of transversal parallel cross walls (13c, 13d, 13e) and said transfer duct (35) begins at the expansion chamber defined downstream the filter unit (21) in correspondence of the fourth compartment (19d) and ends at the expansion chamber defined upstream the catalyser unit (23) in correspondence of the third compartment (19c), **in that** said third section (35c) axially opens in the third compartment (19c), where a corresponding expansion chamber is defined and wherein the gas leaves the transfer duct (35) and expands and **in that** said first section (35a) extends over the whole length of the housing (13) and said second section (35b) extends over the whole width of said housing, thus allowing an optimum dispersion of the reducing mixture into the exhaust gas stream flowing within said duct, while keeping the size of the whole treatment unit compact.

2. Unit according to claim 1, wherein a gas inlet (39) is provided at the beginning of said first section (35a), and wherein said means (37) for introducing the reducing mixture are provided in proximity of said inlet.

3. Unit according to claim 2, wherein said introduction means (37) comprise a nozzle or a valve axially arranged at the beginning of the transfer duct (25) in the direction of flow of the exhaust gases.

4. Unit according to claim 2 or 3, wherein said gas inlet (39) provided in said first section (35a) is radially arranged.

5. Unit according to claim 4, wherein said radial gas inlet (39) provided in said first section is defined by a corresponding portion of said duct provided with through holes (36).

6. Unit according to any of the preceding claims, wherein an axial outlet is provided at the end of said duct (35), and wherein said duct is laterally closed, i.e., it does not have radial openings, between said radial inlet and said axial outlet and extends without interruptions between said filter unit and said catalyser unit.

7. Unit according to claim 6, wherein the opening (15) for the entrance of the exhaust gases opens into the second compartment (19b) and the opening (17) for the exhaust gas evacuation communicates with the first compartment (19a), said first and second compartments (19a, 19b) further defining respective expansion chambers for the exhaust gases, at the beginning and at the end, respectively, of the path followed by the exhaust gas within the treatment unit (11).

8. Unit according to claim 7, wherein said filter unit and said catalyser unit have a cylindrical shape and are hosted side by side and with the longitudinal axes parallel with respect to the longitudinal axis of the housing (13).

9. Unit according to claim 8, wherein the filter unit is provided for reducing the particulate and is of the DPF (Diesel Particulate Filter) type and wherein the catalyser unit is provided for reducing the nitrogen oxides in the exhaust gas stream according to the SCR (Selective Catalytic Reduction) technique.

10. Unit according to claim 9, wherein said filter unit (21) comprises two elements (21a, 21b) arranged in series and comprises an axial opening (25) communicating with the second compartment (19b) for the entrance of the exhaust gases and an outlet opening (27) for the exhaust gases communicating with the expansion chamber defined in the fourth compartment (19d).

11. Unit according to claim 9 or 10, wherein said catalyser unit (23) comprises two catalyser elements (23a, 23b) arranged in series and comprises an axial opening (29) for the entrance of the exhaust gases, communicating with an expansion chamber (31) radially opening into the third compartment (19c), and an axial opening (33) for the evacuation of the exhaust gases communicating with the first compartment (19a).

12. Unit according to claim 1, wherein said inlet opening (15) and outlet opening (17) are radially directed with respect to the longitudinal axis of said housing (13).

13. Unit according to claim 1, wherein said housing (13) has a cylindrical shape and an oval cross section, and wherein said housing has a longitudinal extension greater than the transversal extension.

## Patentansprüche

1. Abgasnachbehandlungseinheit einer Brennkraftmaschine, mit einem Gehäuse (13), das mit einer Einlassöffnung (15) und einer Auslassöffnung (17) zum Eintritt bzw. zum Auslass der Abgase versehen ist, einer Filtereinheit und einer Katalysatoreinheit, die in dem Gehäuse angeordnet sind, einem zwischen diesen Einheiten angeordneten Überleitungskanal (35), um Abgase von der Filtereinheit zu der Katalysatoreinheit zu leiten, wobei der Überleitungskanal (35) U-förmig ist und einen ersten geradlinigen Längsabschnitt (35a), der an seinem Anfang mit Mitteln (37) zum Einspeisen einer Reduktionsmittelmischung versehen ist, einen zweiten quer verlaufenden Verbindungsabschnitt (35b) und einen dritten geradlinigen Abschnitt (35c), der parallel zu dem ersten Abschnitt (35a) verläuft, aufweist, **dadurch gekennzeichnet, dass** das Gehäuse (13) an gegenüberliegenden Enden durch entsprechende Endplatten (13a, 13b) verschlossen ist und in seinem Inneren durch zueinander parallele Querwände (13c, 13d, 13e) in vier Kammern (19a, 19b, 19c, 19d) unterteilt ist und der Übertragungskanal (35) an der Ausdehnungskammer beginnt, die stromabwärts der Filtereinheit (21) in Übereinstimmung mit der vierten Klammer (19d) gebildet ist, und an der Ausdehnungskammer endet, die stromaufwärts der Katalysatoreinheit (23) in Übereinstimmung mit der dritten Kammer (19c) gebildet ist, wobei sich der dritte Abschnitt (35c) axial in der dritten Kammer (19c) öffnet, wo eine entsprechende Ausdehnungskammer gebildet ist und in der das Gas den Übertragungskanal (35) verlässt und sich ausdehnt, wobei der erste Abschnitt (35a) sich über die gesamte Länge des Gehäuses (13) erstreckt und der zweite Abschnitt (35b) sich über die gesamte Breite des Gehäuses erstreckt, so dass eine optimale Verteilung der Reduktionsmittelmischung in dem Abgasstrom ermöglicht wird, der in dem Kanal strömt, und gleichzeitig die Abmessungen der gesamten Behandlungseinheit kompakt bleiben.

2. Einheit nach Anspruch 1, wobei ein Gaseinlass (39) am Einlass des ersten Abschnitts (35a) vorgesehen ist und wobei die Mittel (37) zum Einspeisen des Reduktionsmittels in der Nähe dieses Einlasses vorgesehen sind.

3. Einheit nach Anspruch 2, wobei die Einspeisungsmittel (37) eine axial am Anfang des Übertragungskanals (25) in der Strömungsrichtung der Abgase angeordnete Düse oder ein Ventil umfassen.

4. Einheit nach Anspruch 2 oder 3, wobei der Gaseinlass (39), der in dem ersten Abschnitt (35a) vorgesehen ist, radial ausgerichtet ist.

5. Einheit nach Anspruch 4, wobei der radiale Gaseinlass (39), der in dem ersten Abschnitt vorgesehen ist, durch einen entsprechenden Abschnitt des Kanals gebildet ist, der mit Durchgangsöffnungen (36) versehen ist.

6. Einheit nach einem der vorstehenden Ansprüche, wobei ein axialer Auslass an dem Ende des Kanals (35) vorgesehen ist und wobei der Kanal zwischen dem radialen Einlass und dem radialen Auslass seitlich geschlossen ist, d. h. keine radialen Öffnungen aufweist, und sich ohne Unterbrechungen zwischen der Filtereinheit und der Katalysatoreinheit erstreckt.

7. Einheit nach Anspruch 6, wobei die Öffnung (15) zum Eintritt der Abgase in die zweite Kammer (19b) und die Öffnung (17) zum Abgeben der Abgase mit der ersten Kammer (19a) in Verbindung steht und wobei die ersten und zweiten Kammern (19a, 19b) entsprechende Ausdehnungskammern für die Abgase am Anfang bzw. am Ende des Wegs bilden, den die Abgase in der Behandlungseinheit (11) nehmen.

8. Einheit nach Anspruch 7, wobei die Filtereinheit und die Katalysatoreinheit eine zylindrische Form haben und nebeneinander mit zu der Längsachse des Gehäuses (13) parallelen Längsachsen angeordnet sind.

9. Einheit nach Anspruch 8, wobei die Filtereinheit zur Partikelreduktion vorgesehen ist und ein DPF (Dieselpartikelfilter) ist und wobei die Katalysatoreinheit zum Reduzieren von Stickoxiden im Abgasstrom nach dem SCR (Selective Catalytic Reduction) Verfahren vorgesehen ist.

10. Einheit nach Anspruch 9, wobei die Filtereinheit (21) zwei Elemente (21a, 21b) aufweist, die hintereinander angeordnet sind und eine axiale Öffnung (25), die mit der zweiten Kammer (19b) zum Einlass der Abgase in Verbindung steht, und eine Auslassöffnung (27) für die Abgase, die mit der in der vierten Kammer (19d) gebildeten Ausdehnungskammer in Verbindung stehen, aufweisen.

11. Einheit nach Anspruch 9 oder 10, wobei die Katalysatoreinheit (23) zwei Katalysatorelemente (23a, 23b) aufweist, die hintereinander angeordnet sind und eine axiale Öffnung (29) für den Eintritt der Abgase, die mit einer Ausdehnungskammer (31) in Verbindung steht und die sich radial in die dritte Kammer (19c) öffnet, und einer axialen Öffnung (33) zum Auslass der Abgase, die mit der ersten Kammer (19a) in Verbindung steht, aufweisen.

12. Einheit nach Anspruch 1, wobei die Einlassöffnung (15) und die Auslassöffnung (17) radial in Bezug auf die Längsachse des Gehäuses (13) ausgerichtet sind.

13. Einheit nach Anspruch 1, wobei das Gehäuse (13) eine zylindrische Form und einen ovalen Querschnitt aufweist und wobei das Gehäuse eine Ausdehnung in Längsrichtung hat, die größer als seine Ausdehnung in Querrichtung ist.

## Revendications

1. Unité de traitement de gaz d'échappement de moteur à combustion interne, comprenant un boîtier (13) équipé d'une ouverture d'entrée (15) et d'une ouverture de sortie (17), permettant respectivement l'admission et l'évacuation des gaz d'échappement, une unité filtre et une unité catalyseur étant logées à l'intérieur dudit boîtier, un conduit de transfert (35) destinée au transfert des gaz d'échappement de ladite unité filtre vers ladite unité catalyseur étant disposée entre lesdites unités, ladite conduire de transfert (35) ayant une forme de « U » et comportant, définies en son sein, une première section longitudinale rectiligne (35a) équipée, au niveau de sa partie de début, de moyens (37) pour introduire un mélange de substance de réduction, une deuxième section de raccordement transversale (35b) et une troisième section rectiligne (35c) parallèle à la première section (35a), **caractérisée en ce que** ledit boîtier (13) est fermé au niveau de ses extrémités opposées par des plaques d'extrémité respectives (13a, 13b) et est intérieurement cloisonné en quatre compartiments (19a, 19b, 19c, 19d) au moyen de cloisons traversantes parallèles transversales (13c, 13d, 13e), et **en ce que** ledite conduit de transfert (35) commence au niveau de la chambre de détente définie en aval de l'unité filtre (21) en correspondance avec le quatrième compartiment (19d) et se termine au niveau de la chambre de détente définie en amont de l'unité catalyseur (23) en correspondance avec le troisième compartiment (19c), **en ce que** ladite troisième section (35c) débouche axialement dans le troisième compartiment (19c), là où est définie une chambre de détente correspondante et dans laquelle le gaz sort du conduit de transfert (35) et se détend, et **en ce que** ladite première section (35a) s'étend sur toute la longueur du boîtier (13) et ladite deuxième section (35b) s'étend sur toute la largeur dudit boîtier, permettant ainsi une dispersion optimale du mélange de réduction dans le flux de gaz d'échappement circulant à l'intérieur dudit conduit, tout en maintenant la compacité de taille de l'ensemble de l'unité de traitement.

2. Unité selon la revendication 1, dans laquelle une entrée de gaz (39) est ménagée au niveau de la partie de début de ladite première section (35a), et dans laquelle lesdits moyens (37) pour introduire le mélange de réduction sont disposés à proximité de ladite entrée.

3. Unité selon la revendication 2, dans laquelle lesdits moyens d'introduction (37) comprennent une buse ou une soupape disposées axialement au niveau du début du conduit de transfert (25) dans le sens de circulation des gaz d'échappement.

4. Unité selon la revendication 2 ou la revendication 3, dans laquelle ladite entrée de gaz (39) ménagée dans ladite première section (35a) est disposée radialement.

5. Unité selon la revendication 4, dans laquelle ladite entrée de gaz radiale (39) ménagée dans ladite première section est définie par une partie correspondante dudit conduit pourvu de trous traversants (36).

6. Unité selon l'une quelconque des revendications précédentes, dans laquelle une sortie axiale est ménagée au niveau de l'extrémité dudit conduite (35), et dans laquelle ledit conduit est fermée latéralement, c'est-à-dire qu'elle ne comporte pas d'ouverture radiale, entre ladite entrée radiale et ladite sortie axiale et s'étend sans interruption entre ladite unité filtre et ladite unité catalyseur.

7. Unité selon la revendication 6, dans laquelle l'ouverture (15) destinée à l'admission des gaz d'échappement débouche dans un second compartiment (19b) et l'ouverture (17) destinée à l'évaluation des gaz d'échappement communique avec le premier compartiment (19a), lesdits premier et deuxième compartiments (19a, 19b) définissant en outre des chambres de détente respectives des gaz d'échappement, respectivement niveau du début et au niveau de la fin du trajet suivi par les gaz d'échappement à l'intérieur de l'unité de traitement (11).

8. Unité selon la revendication 7, dans laquelle ladite unité filtre et ladite unité catalyseur ont une forme cylindrique et sont logées côte à côte et les axes longitudinaux étant parallèles à l'axe longitudinal du boîtier (13).

9. Unité selon la revendication 8, dans laquelle l'unité filtre est conçue pour réduire les particules et est du type DPF (filtre à particules diesel) et dans laquelle l'unité catalyseur est conçue pour réduire les oxydes d'azote du flux de gaz d'échappement conformément à la technique de SCR (réduction catalytique sélective).

10. Unité selon la revendication 9, dans laquelle ladite unité filtre (21) comprend deux éléments (21a, 21b) disposés en série et comprend une ouverture axiale (25) communiquant avec le deuxième compartiment (19b) destiné à l'admission des gaz d'échappement et une ouverture de sortie (27) destinée aux gaz d'échappement communiquant avec la chambre de détente définie dans le quatrième compartiment (19d).

11. Unité selon la revendication 9 ou la revendication 10, dans laquelle ladite unité catalyseur (23) comprend deux éléments catalyseurs (23a, 23b) disposés en série et comprend une ouverture axiale (29) destinée à l'admission des gaz d'échappement, communiquant avec une chambre de détente (31) débouchant radialement dans le troisième compartiment (19c), et une ouverture axiale (33) destinée à l'évacuation des gaz d'échappement communiquant avec le premier compartiment (19a).

12. Unité selon la revendication 1, dans laquelle ladite ouverture d'entrée (15) et ladite ouverture de sortie (17) sont dirigées radialement par rapport à l'axe longitudinal dudit boîtier (13).

13. Unité selon la revendication 1, dans laquelle ledit boîtier (13) a une forme cylindrique et a une section transversale ovale, et dans laquelle ledit boîtier a une étendue longitudinale supérieure à l'étendue transversale.
